# EUROPEAN PATENT SPECIFICATION

(11) **EP 1 235 997 B1**
(45) Date of publication and mention of the grant of the patent: **17.12.2003**
(21) Application number: 00988508.8
(22) Date of filing: 24.10.2000
(51) Int. Cl.: F16H 15/28

(54) **CONTINUOUSLY VARIABLE TRANSMISSION**
STUFENLOSES GETRIEBE
TRANSMISSION A CHANGEMENT DE VITESSES CONTINU

(30) Priority: 12.11.1999 US 165037 P; 02.03.2000 US 186495 P; 29.03.2000 US 193144 P
(43) Date of publication of application: 04.09.2002
(73) Proprietor: Motion Technologies, LLC, Fallbrook, CA 92028 (US)
(72) Inventor: MILLER, Donald, C., Fallbrook, CA 92028 (US)
(74) Representative: Hector, Annabel Mary
(86) International application number: US0041550
(87) International publication number: WO01038758

(56) References cited:
- WO-A-99/20918
- US-A- 2 931 234
- US-A- 3 707 888
- US-A- 5 236 403

## Description

### Background of the Invention

### Field of the Invention

The field of the invention relates to transmissions. More particularly the invention relates to continuously variable transmissions.

### Description of the Related Art

In order to provide an infinitely variable transmission, various traction roller transmissions in which power is transmitted through traction rollers supported in a housing between torque input and output disks have been developed. In such transmissions, the traction rollers are mounted on support structures which, when pivoted, cause the engagement of traction rollers with the torque disks in circles of varying diameters depending on the desired transmission ratio.

However, the success of these traditional solutions has been limited. For example, in U.S. Patent No. 5,236,403 to Schievelbusch a driving hub for a vehicle with a variable adjustable transmission ratio is disclosed. Schievelbusch teaches the use of two iris plates, one on each side of the traction rollers, to tilt the axis of rotation of each of the rollers. However, the use of iris plates can be very complicated due to the large number of parts which are required to adjust the iris plates during shifting the transmission. Another difficulty with this transmission is that it has a guide ring which is configured to be predominantly stationary in relation to each of the rollers. Since the guide ring is stationary, shifting the axis of rotation of each of the traction rollers is difficult. Yet another limitation of this design is that it requires the use of two half axles, one on each side of the rollers, to provide a gap in the middle of the two half axles. The gap is necessary because the rollers are shifted with rotating motion instead of sliding linear motion. The use of two axles is not desirable and requires a complex fastening system to prevent the axles from bending when the transmission is accidentally bumped, is as often the case when a transmission is employed in a vehicle. Yet another limitation of this design is that it does not provide for an automatic transmission.

Therefore, there is a need for a continuously variable transmission with a simpler shifting method, a single axle, and a support ring having a substantially uniform outer surface. Additionally, there is a need for an automatic traction roller transmission that is configured to shift automatically. Further, the practical commercialization of traction roller transmissions requires improvements in the reliability, ease of shifting, function and simplicity of the transmission.

### Summary of the Invention

The present invention includes a transmission for use in rotationally or linearly powered machines and vehicles. For example the present transmission may be used in machines such as drill presses, turbines, and food processing equipment, and vehicles such as automobiles, motorcycles, and bicycles. The transmission may, for example, be driven by a power transfer mechanism such as a sprocket, gear, pulley or lever, optionally driving a one way clutch attached at one end of the main shaft.

In one embodiment of the invention, the transmission comprises a rotatable driving member, three or more power adjusters, wherein each of the power adjusters respectively rotates about an axis of rotation that is centrally located within each of the power adjusters, a support member providing a support surface that is in frictional contact with each of the power adjusters, wherein the support member rotates about an axis that is centrally located within the support member, at least one platform for actuating axial movement of the support member and for actuating a shift in the axis of rotation of the power adjusters, wherein the platform provides a convex surface, at least one stationary support that is non-rotatable about the axis of rotation that is defined by the support member, wherein the at least one stationary support provides a concave surface, and a plurality of spindle supports, wherein each of the spindle supports are slidingly engaged with the convex surface of the platform and the concave surface of the stationary support, and wherein each of the spindle supports adjusts the axes of rotation of the power adjusters in response to the axial movement of the platform.

In another embodiment, the transmission comprises a rotatable driving member; three or more power adjusters, wherein each of the power adjusters respectively rotates about an axis of rotation that is respectively central to the power adjusters, a support member providing a support surface that is in frictional contact with each of the power adjusters, a rotatable driving member for rotating each of the power adjusters, a bearing disc having a plurality of inclined ramps for actuating the rotation of the driving member, a coiled spring for biasing the rotatable driving member against the power adjusters, at least one lock pawl ratchet, wherein the lock pawl ratchet is rigidly attached to the rotatable driving member, wherein the at least one lock pawl is operably attached to the coiled spring, and at least one lock pawl for locking the lock pawl ratchet in response to the rotatable driving member becoming disengaged from the power adjusters.

In still another embodiment, the transmission comprises a rotatable driving member, three or more power adjusters, wherein each of the power adjusters respectively rotates about an axis that is respectively central to each of the power adjusters, a support member providing a support surface that is in frictional contact with each of the power adjusters, wherein the support member rotates about an axis that is centrally located within the support member, a bearing disc having a plurality of inclined ramps for actuating the rotation of the driving member, a screw that is coaxially and rigidly attached to the rotatable driving member or the bearing disc, and a nut that, if the screw is attached to the rotatable driving member, is coaxially and rigidly attached to the bearing disc, or if the screw is rigidly attached to the bearing disc, coaxially and rigidly attached to the rotatable driving member, wherein the inclined ramps of the bearing disc have a higher lead than the screw.

### Brief Description of the Drawings

Figure 1 is a cutaway side view of the transmission of the present invention.
Figure 2 is a partial perspective view of the transmission of Figure 1.
Figure 3 is a perspective view of two stationary supports of the transmission of Figure 1.
Figure 4 is a partial end, cross-sectional view of the transmission of Figure 1.
Figure 5 is a perspective view of a drive disc, bearing cage, screw, and ramp bearings of the transmission of Figure 1.
Figure 6 is a perspective view of a ratchet and pawl subsystem of the transmission of Figure 1 that is used to engage and disengage the transmission.
Figure 7 is partial perspective view of the transmission of Figure 1, wherein, among other things, a rotatable drive disk has been removed.
Figure 8 is a partial perspective view of the transmission of Figure 1, wherein, among other things, the hub shell has been removed.
Figure 9 is a partial perspective view of the transmission of Figure 1, wherein the shifting is done automatically.
Figure 10 is a perspective view of the shifting handlegrip that is mechanically coupled to the transmission of Figure 1.
Figure 11 is an end view of a thrust bearing, of the transmission shown in Figure 1, which is used for automatic shifting of the transmission.
Figure 12 is an end view of the weight design of the transmission shown in Figure 1.
Figure 13 is a perspective view of an alternate embodiment of the transmission bolted to a flat surface.
Figure 14 is a cutaway side view of the transmission shown in Figure 13.
Figure 15 is a schematic end view of the transmission in Figure 1 showing the cable routing across a spacer extension of the automatic portion of the transmission.
Figure 16 is a schematic end view of the cable routing of the transmission shown in Figure 13.

### Detailed Description of the Preferred Embodiment

The following detailed description is directed to certain specific embodiments of the invention. However, the invention can be embodied in a multitude of different ways as defined and covered by the claims. In this description, reference is made to the drawings wherein like parts are designated with like numerals throughout. Furthermore, embodiments of the invention may include several novel features, no single one of which is solely responsible for its desirable attributes or which is essential to practicing the inventions herein described.

The present invention includes a continuously variable transmission that may be employed in connection with any type of machine that is in need of a transmission. For example, the transmission may be used in (i) a motorized vehicle such as an automobile, motorcycle, or watercraft, (ii) a non-motorized vehicle such as a bicycle, tricycle, scooter, exercise equipment or (iii) industrial equipment, such as a drill press, power generating equipment, or textile mill.

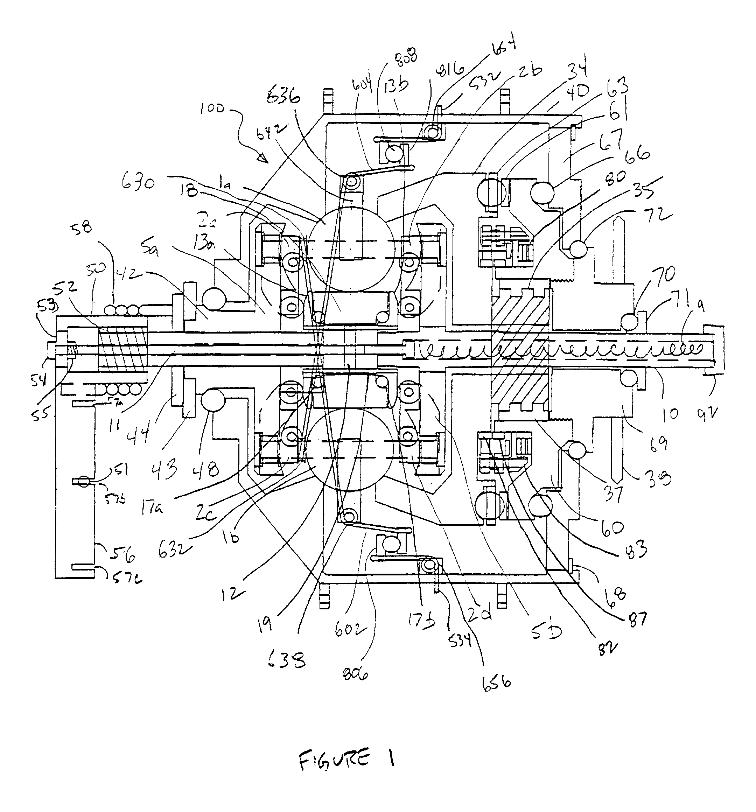

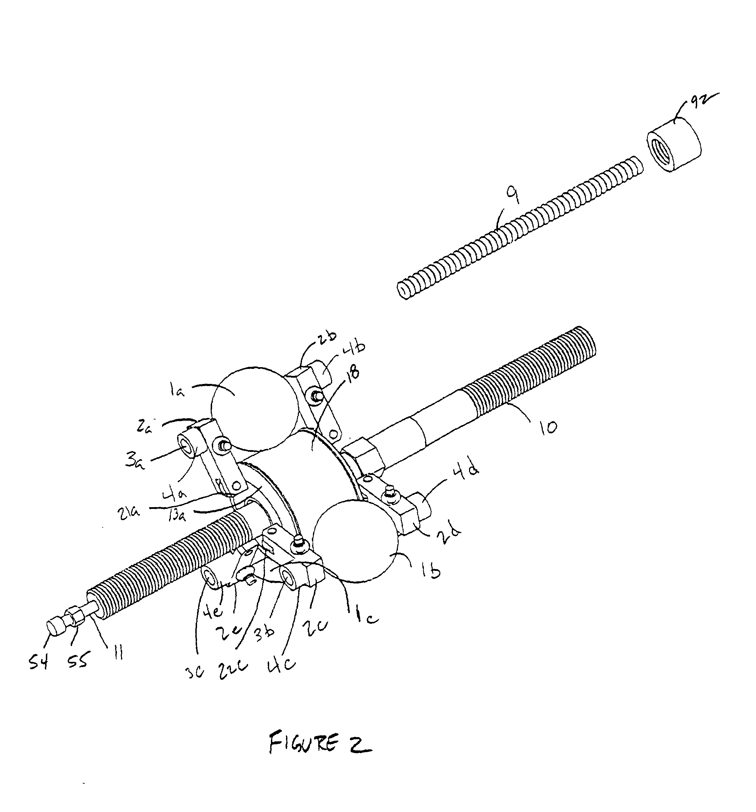

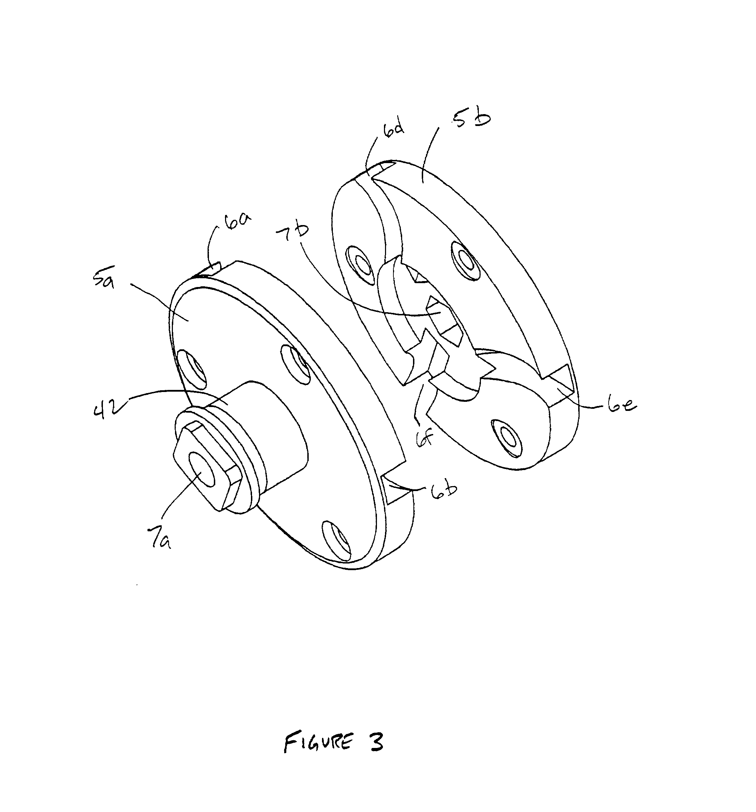

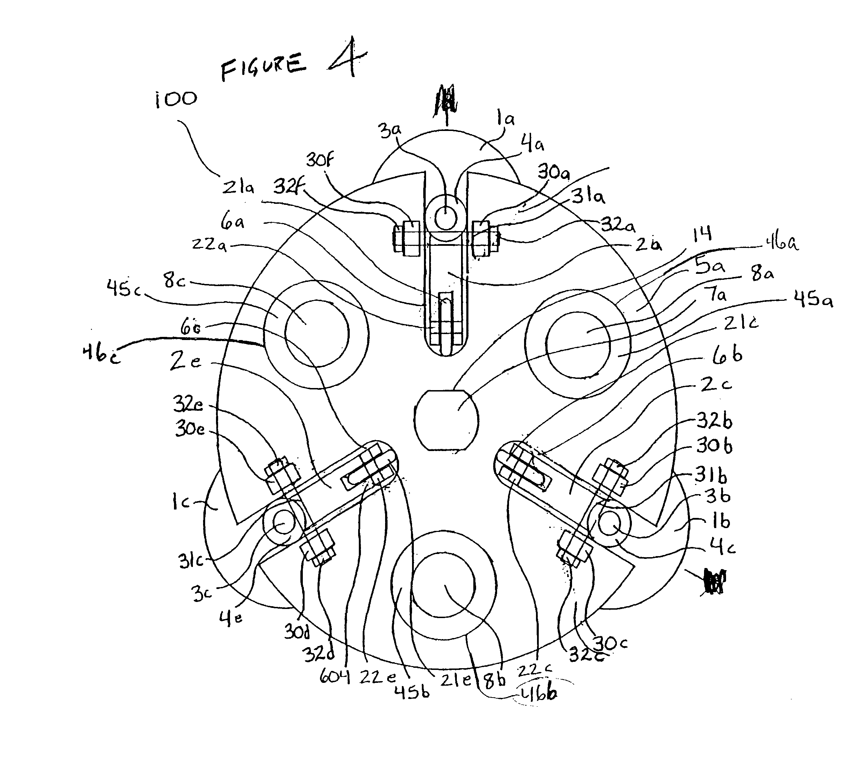

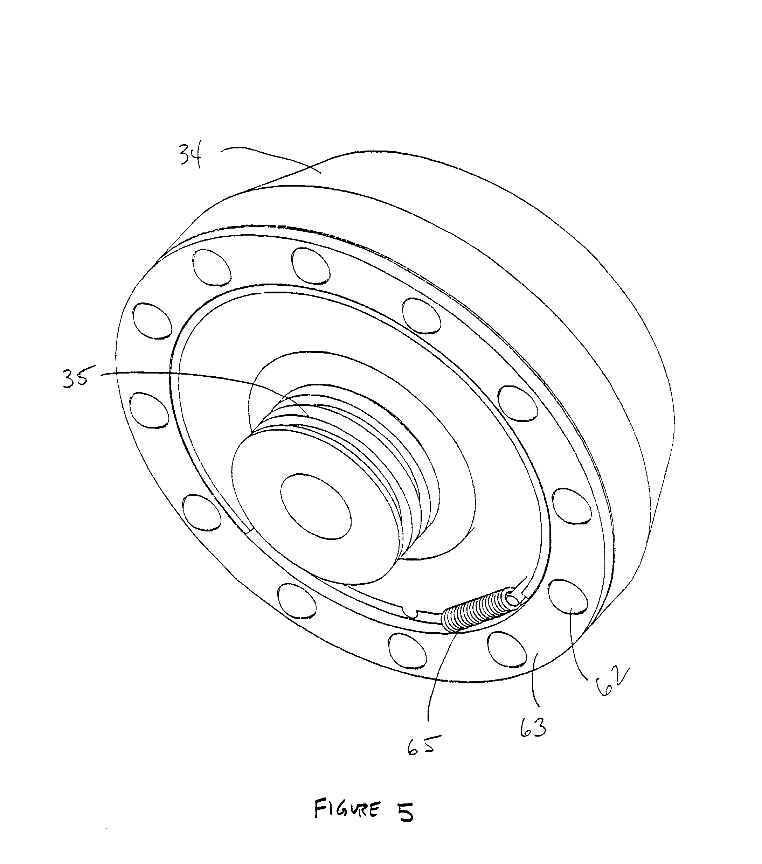

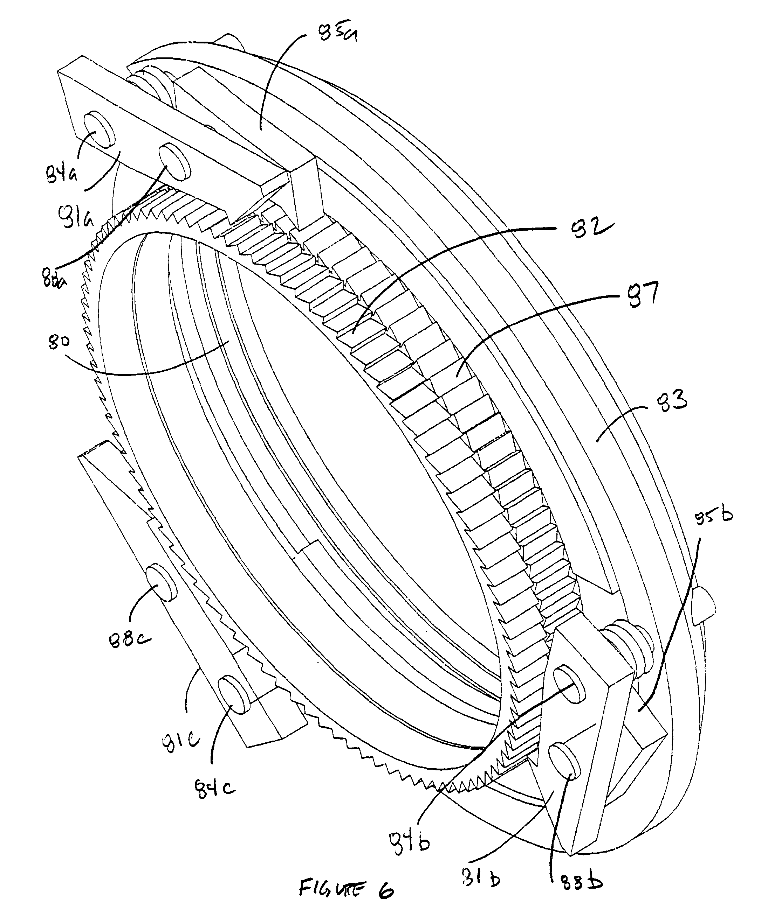

Referring to Figures 1 and 2, a continuously variable transmission 100 is disclosed. The transmission 100 is shrouded in a hub shell 40 covered by a hub cap 67. At the heart of the transmission 100 are three or more power adjusters 1a, 1b, 1c which are spherical in shape and are circumferentially spaced equally around the centerline or axis of rotation of the transmission 100. As seen more clearly in Figure 2, spindles 3a, 3b, 3c are inserted through the center of the power adjusters 1a, 1b, 1c to define an axis of rotation for the power adjusters 1a, 1b, 1c. In Figure 1, the power adjuster's axis of rotation is shown in the horizontal direction. Spindle supports 2a-f are attached perpendicular to and at the exposed ends of the spindles 3a, 3b, 3c. In one embodiment, each of the spindles supports have a bore to receive one end of one of the spindles 3a, 3b, 3c. The spindles 3a, 3b, 3c also have spindle rollers 4a-f coaxially and slidingly positioned over the exposed ends of the spindles 3a, 3b, 3c outside of the spindle supports 2a-f.

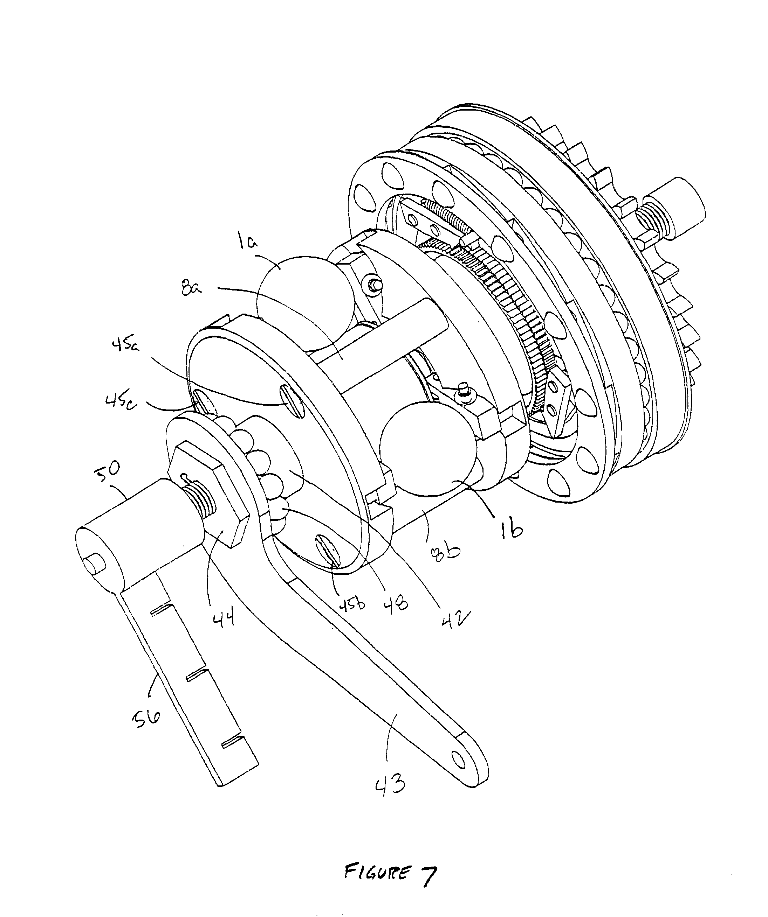

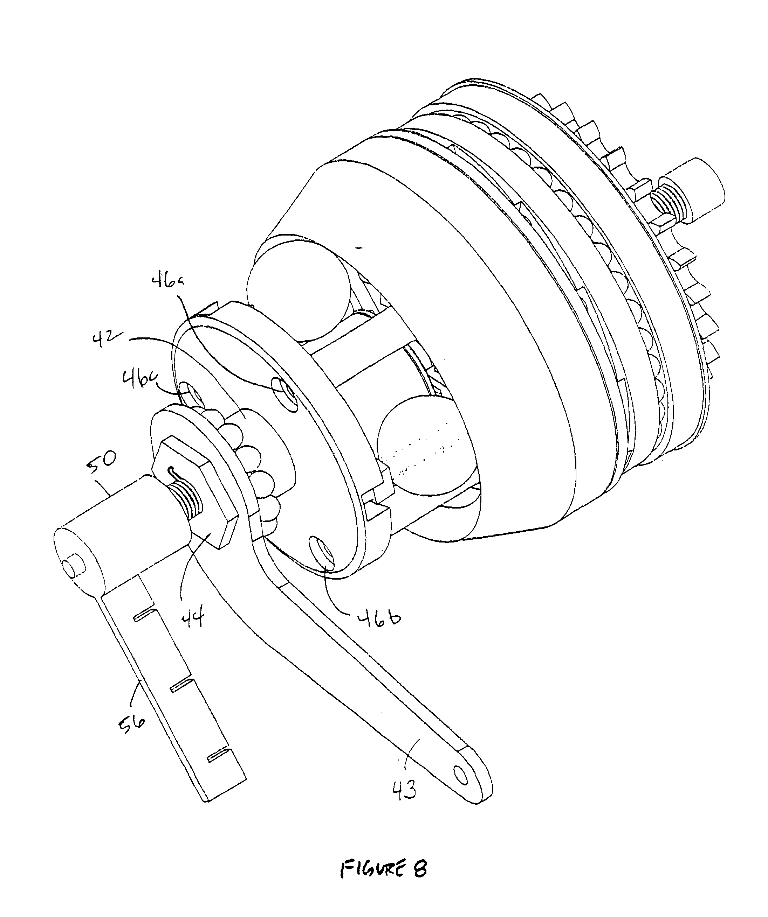

As the rotational axis of the power adjusters 1a, 1b, 1c is changed by tilting the spindles 3a, 3b, 3c, each spindle roller 4a-f follows in a groove 6a-f cut into a stationary support 5a, 5b. Referring to Figures 1 and 3, the stationary supports 5a, 5b are generally in the form of parallel disks with an axis of rotation along the centerline of the transmission 100. The grooves 6a-f extend from the outer circumference of the stationary supports 5a, 5b towards the centerline of the transmission 100. While the sides of the grooves 6a-f are substantially parallel, the bottom surface of the grooves 6a-f forms a decreasing radius as it runs towards the centerline of the transmission 100. As the transmission 100 is shifted to a lower or higher gear by changing the rotational axes of the power adjusters 1a, 1b, 1c, each pair of spindle rollers 4a-f, located on a single spindle 3a, 3b, 3c, moves in opposite directions along their corresponding grooves 6a-f.

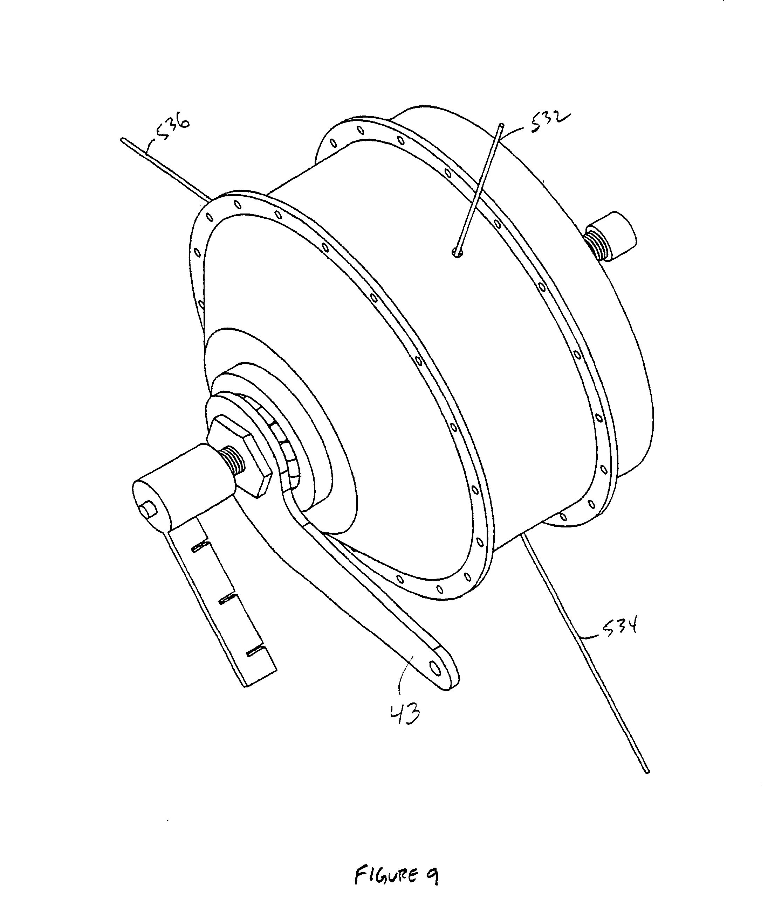

Referring to Figures 1 and 3, a centerline hole 7a, 7b in the stationary supports 5a, 5b allows the insertion of a hollow shaft 10 through both stationary supports 5a, 5b. Referring to Figure 4, in an embodiment of the invention, one or more of the stationary support holes 7a, 7b may have a non-cylindrical shape 14, which fits over a corresponding non-cylindrical shape 15 along the hollow shaft 10 to prevent any relative rotation between the stationary supports 5a, 5b and the hollow shaft 10. If the rigidity of the stationary supports 5a, 5b is insufficient, additional structure may be used to minimize any relative rotational movement or flexing of the stationary supports 5a, 5b. This type of movement by the stationary supports 5a, 5b may cause binding of the spindle rollers 4a-f as they move along the grooves 6a-f.

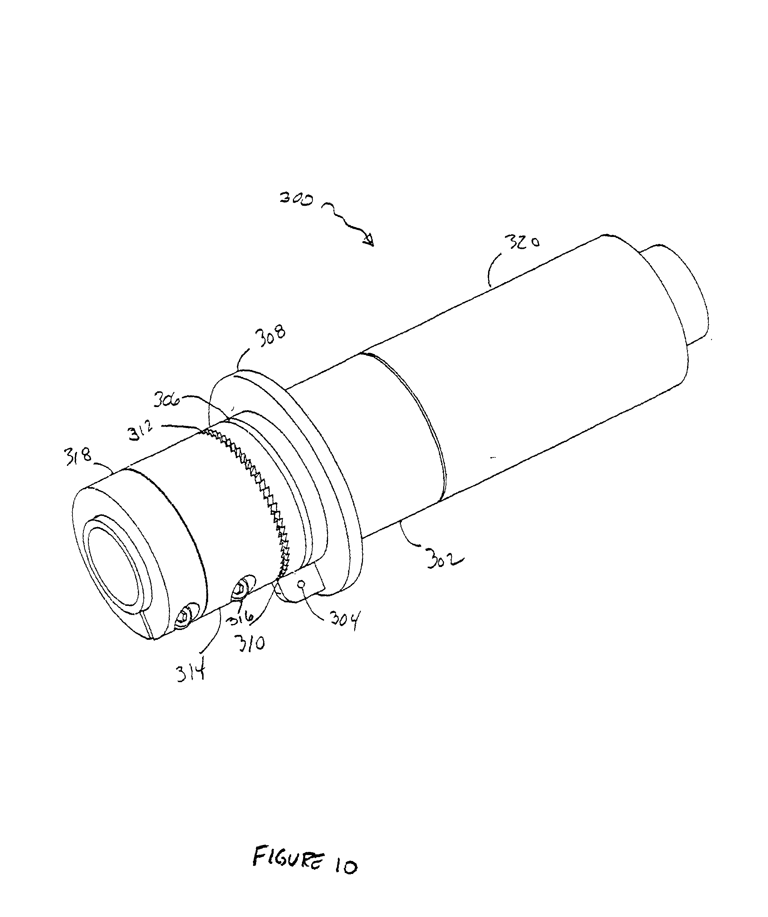

As shown in Figures 4 and 7, the additional structure may take the form of spacers 8a, 8b, 8c attached between the stationary supports 5a, 5b. The spacers 8a, 8b, 8c add rigidity between the stationary supports 5a, 5b and, in one embodiment, are located near the outer circumference of the stationary supports 5a, 5b. In one embodiment, the stationary supports 5a, 5b are connected to the spacers 8a, 8b, 8c by bolts or other fastener devices 45a-f inserted through holes 46a-f in the stationary supports 5a, 5b.

Referring back to Figures 1 and 3, the stationary support 5a is fixedly attached to a stationary support sleeve 42, which coaxially encloses the hollow shaft 10 and extends through the wall of the hub shell 40. The end of the stationary support sleeve 42 that extends through the hub shell 40 attaches to the frame support and preferentially has a non-cylindrical shape to enhance subsequent attachment of a torque lever 43. As shown more clearly in Figure 7, the torque lever 43 is placed over the non-cylindrical shaped end of the stationary support sleeve 42, and is held in place by a torque nut 44. The torque lever 43 at its other end is rigidly attached to a strong, non-moving part, such as a frame (not shown). A stationary support bearing 48 supports the hub shell 40 and permits the hub shell 40 to rotate relative to the stationary support sleeve 42.

Referring back to Figures 1 and 2, shifting is manually activated by axially sliding a rod 11 positioned in the hollow shaft 10. One or more pins 12 are inserted through one or more transverse holes in the rod 11 and further extend through one or more longitudinal slots 16 (not shown) in the hollow shaft 10. The slots 16 in the hollow shaft 10 allow for axial movement of the pin 12 and rod 11 assembly in the hollow shaft 10. As the rod 11 slides axially in the hollow shaft 10, the ends of the transverse pins 12 extend into and couple with a coaxial sleeve 19. The sleeve 19 is fixedly attached at each end to a substantially planar platform 13a, 13b forming a trough around the circumference of the sleeve 19.

As seen more clearly in Figure 4, the planar platforms 13a, 13b each contact and push multiple wheels 21 a-f. The wheels 21a-f fit into slots in the spindle supports 2a-f and are held in place by wheel axles 22a-f. The wheel axles 22a-f are supported at their ends by the spindle supports 2a-f and allow rotational movement of the wheels 21a-f.

Referring back to Figures 1 and 2, the substantially planar platforms 13a, 13b transition into a convex surface at their outer perimeter (farthest from the hollow shaft 10). This region allows slack to be taken up when the spindle supports 2a-f and power adjusters 1 a, 1b, 1c are tilted as the transmission 100 is shifted. A cylindrical support member 18 is located In the trough formed between the planar platforms 13a, 13b and sleeve 19 and thus moves in concert with the planar platforms 13a, 13b and sleeve 19. The support member 18 rides on contact bearings 17a, 17b located at the intersection of the planar platforms 13a, 13b and sleeve 19 to allow the support member 18 to freely rotate about the axis of the transmission 100. Thus, the bearings 17a, 17b, support member 18, and sleeve 19 all slide axially with the planar platforms 13a, 13b when the transmission 100 is shifted.

Now referring to Figures 3 and 4, stationary support rollers 30a-l are attached in pairs to each spindle leg 2a-f through a roller pin 31a-f and held in place by roller clips 32a-l. The roller pins 31a-f allow the stationary support rollers 30a-l to rotate freely about the roller pins 31a-f. The stationary support rollers 30a-l roll on a concave radius in the stationary support 5a, 5b along a substantially parallel path with the grooves 6a-f. As the spindle rollers 4a-f move back and forth inside the grooves 6a-f, the stationary support rollers 30a-l do not allow the ends of the spindles 3a, 3b, 3c nor the spindle rollers 4a-f to contact the bottom surface of the grooves 6a-f, to maintain the position of the spindles 3a, 3b, 3c, and to minimize any frictional losses.

Figure 4 shows the stationary support rollers 30a-l, the roller pins, 31a-f, and roller clips 32a-l, as seen through the stationary support 5a, for ease of viewing. For clarity, i.e., too many numbers in Figure 1, the stationary support rollers 30a-l, the roller pins, 31a-f, and roller clips 32a-l, are not numbered in Figure 1.

Referring to Figures 1 and 5, a concave drive disc 34, located adjacent to the stationary support 5b, partially encapsulates but does not contact the stationary support 5b. The drive disk 34 is rigidly attached through its center to a screw 35. The screw 35 is coaxial to and forms a sleeve around the hollow shaft 10 adjacent to the stationary support 5b and faces a driving member 69. The drive disc 34 is rotatively coupled to the power adjusters 1a, 1b, 1c along a circumferential bearing surface on the lip of the drive disk 34.. A nut 37 is threaded over the screw 35 and is rigidly attached around its circumference to a bearing disc 60. One face of the nut 37 is further attached to the driving member 69. Also rigidly attached to the bearing disc 60 surface are a plurality of ramps 61 which face the drive disc 34. For each ramp 61 there is one ramp bearing 62 held in position by a bearing cage 63. The ramp bearings 62 contact both the ramps 61 and the drive disc 34. A spring 65 is attached at one end to the bearing cage 63 and at its other end to the drive disc 34, or the bearing disc 60 in an alternate embodiment, to bias the ramp bearings 62 up the ramps 61. The bearing disc 60, on the side opposite the ramps 61 and at approximately the same circumference contacts a hub cap bearing 66. The hub cap bearing 66 contacts both the hub cap 67 and the bearing disc 60 to allow their relative motion. The hub cap 67 is threaded or pressed into the hub shell 40 and secured with an internal ring 68. A sprocket or pulley 38 is rigidly attached to the rotating driving member 69 and is held in place externally by a cone bearing 70 secured by a cone nut 71 and internally by a driver bearing 72 which contacts both the driving member 69 and the hub cap 67.

In operation, an input rotation from the sprocket or pulley 38, which is fixedly attached to the driver 69, rotates the bearing disc 60 and the plurality of ramps 61 causing the ramp bearings 62 to roll up the ramps 61 and press the drive disc 34 against the power adjusters 1a, 1b, 1c. Simultaneously, the nut 37, which has a smaller lead than the ramps 61, rotates to cause the screw 35 and nut 37 to bind. This feature imparts rotation of the drive disc 34 against the power adjusters 1a, 1b, 1c. The power adjusters 1a, 1b, 1c, when rotating, contact and rotate the hub shell 40.

When the transmission 100 is coasting, the sprocket or pulley 38 stops rotating but the hub shell 40 and the power adjusters 1a, 1b, 1c, continue to rotate. This causes the drive disc 34 to rotate so that the screw 35 winds into the nut 37 until the drive disc 34 no longer contacts the power adjusters 1a, 1b, 1c.

Referring to Figures 1, 6, and 7, a coiled spring 80, coaxial with the transmission 100, is located between and attached by pins or other fasteners (not shown) to both the bearing disc 60 and drive disc 34 at the ends of the coiled spring 80. During operation of the transmission 100, the coiled spring 80 ensures contact between the power adjusters 1a, 1b, 1 c and the drive disc 34. A pawl carrier 83 fits in the coiled spring 80 with its middle coil attached to the pawl carrier 83 by a pin or standard fastener (not shown). Because the pawl carrier 83 is attached to the middle coil of the coiled spring 80, it rotates at half the speed of the drive disc 34 when the bearing disc 60 is not rotating. This allows one or more lock pawls 81 a, 81 b, 81 c, which are attached to the pawl carrier 83 by one or more pins 84a, 84b, 84c. to engage a drive disc ratchet 82, which is coaxial with and rigidly attached to the drive disc 34. The one or more lock pawls 84a, 84b, 84c are preferably spaced asymmetrically around the drive disc ratchet 82. Once engaged, the loaded coiled spring 80 is prevented from forcing the drive disc 34 against the power adjusters 1a, 1b, 1c. Thus, with the drive disc 34 not making contact against the power adjusters 1a, 1b, 1c, the transmission 100 is in neutral and the ease of shifting is increased. The transmission 100 can also be shifted while in operation.

When operation of the transmission 100 is resumed by turning the sprocket or pulley 38, one or more release pawls 85a, 85b, 85c, each attached to one of the lock pawls 81a, 81b, 81c by a pawl pin 88a, 88b, 88c, make contact with an opposing bearing disk ratchet 87. The bearing disk ratchet 87 is coaxial with and rigidly attached to the bearing disc 60. The bearing disc ratchet 87 actuates the release pawls 85a, 85b, 85c because the release pawls 85a, 85b, 85c are connected to the pawl carrier 83 via the lock pawls 81a, 81b, 81c. In operation, the release pawls 85a, 85b, 85c rotate at half the speed of the bearing disc 60, since the drive disc 34 is not rotating, and disengage the lock pawls 81a, 81b, 81c from the drive disc ratchet 82 allowing the coiled spring 80 to wind the drive disc 34 against the power adjusters 1a, 1b, 1 c. One or more pawl tensioners (not shown), one for each release pawl 85a, 85b, 85c, ensures that the lock pawls 81 a, 81b, 81 are pressed against the drive disc ratchet 82 and that the release pawls 85a, 85b, 85c are pressed against the bearing disc ratchet 87. The pawl tensioners are attached at one end to the pawl carrier 83 and make contact at the other end to the release pawls 85a, 85b, 85c. An assembly hole 93 (not shown) through the hub cap 67, the bearing disc 60, and the drive disc 34, allows an assembly pin (not shown) to be inserted into the loaded coiled spring 80 during assembly of the transmission 100. The assembly pin prevents the coiled spring 80 from losing its tension and is removed after transmission 100 assembly is complete.

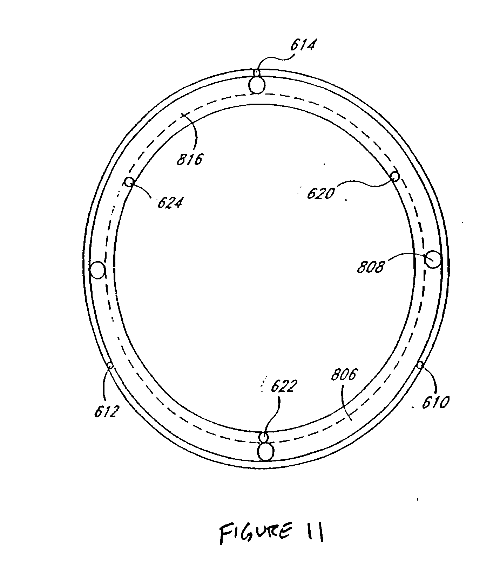

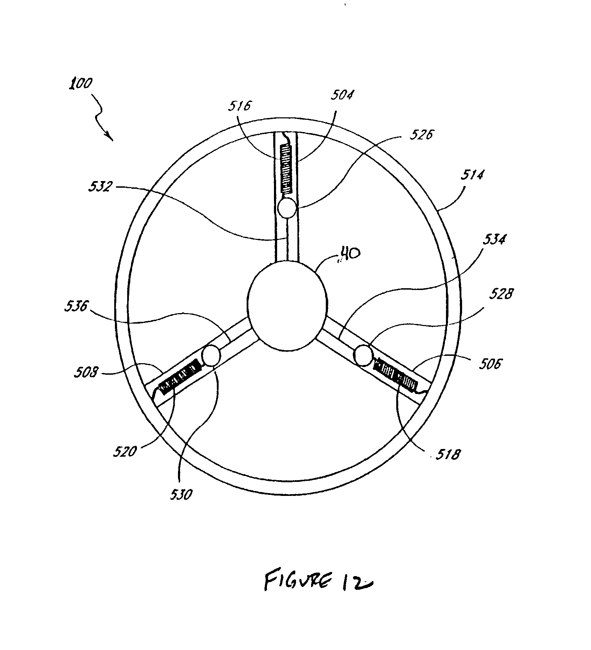

Referring to Figures 1, 11, 12, and 15, automatic shifting of the transmission 100, is accomplished by means of spindle cables 602, 604, 606 which are attached at one end to a non-moving component of the transmission 100, such as the hollow shaft 10 or the stationary support 5a. The spindle cables 602, 604, 606 then travel around spindle pulleys 630, 632, 634, which are coaxially positioned over the spindles 3a, 3b, 3c. The spindle cables 602, 604, 606 further travel around spacer pulleys 636, 638, 640, 644, 646, 648 which are attached to a spacer extension 642 which may be rigidly attached to the spacers 8a, 8b, 8c. As more clearly shown in Figures 11 and 12, the other ends of the spindle cables 602, 604, 606 are attached to a plurality of holes 620, 622, 624 in a non-rotating annular bearing race 816. A plurality of weight cables 532, 534, 536 are attached at one end to a plurality of holes 610, 612, 614 in a rotating annular bearing race 806. An annular bearing 808, positioned between the rotating annular bearing race 806 and the non-rotating annular bearing race 816, allows their relative movement.

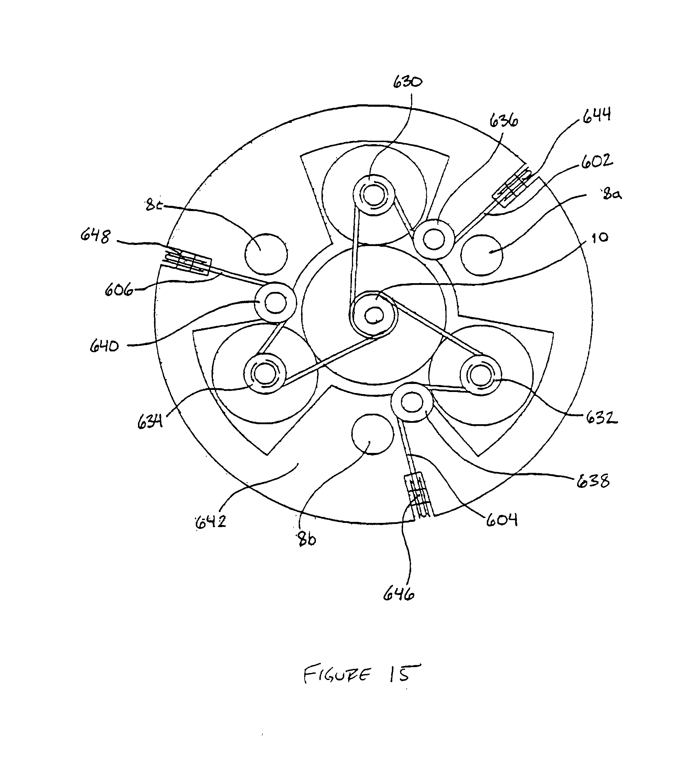

Referring to Figure 15, the transmission 100 is shown with the cable routing for automatic shifting.

As shown in Figures 1, 9, 11, and 12, the weight cables 532, 534, 536 then travel around the hub shell pulleys 654, 656, 658, through holes in the hub shell 40, and into hollow spokes 504, 506, 508 (best seen in Figure 12) where they attach to weights 526, 528, 530. The weights 526, 528, 530 are attached to and receive support from weight assisters 516, 518, 520 which attach to a wheel 514 or other rotating object at there opposite end. As the wheel 514 increases its speed of rotation, the weights 526, 528, 530 are pulled radially away from the hub shell 40, pulling the rotating annular bearing race 806 and the non-rotating annular bearing race 816 axially toward the hub cap 67. The non-rotating annular bearing race 816 pulls the spindle cables 602, 604, 606, which pulls the spindle pulleys 630, 632, 634 closer to the hollow shaft 10 and results in the shifting of the transmission 100 into a higher gear. When rotation of the wheel 514 slows, one or more tension members 9 positioned inside the hollow shaft 10 and held in place by a shaft cap 92, push the spindle pulleys 630, 632, 634 farther from the hollow shaft 10 and results in the shifting of the transmission 100 into a lower gear.

Alternatively, or in conjunction with the tension member 9. multiple tension members (not shown) may be attached to the spindles 3a, 3b, 3c opposite the spindle pulleys 630, 632, 634.

Still referring to Figure 1, the transmission 100 can also be manually shifted to override the automatic shifting mechanism or to use in place of the automatic shifting mechanism. A rotatable shifter 50 has internal threads that thread onto external threads of a shifter screw 52 which is attached over the hollow shaft 10. The shifter 50 has a cap 53 with a hole that fits over the rod 11 that is inserted into the hollow shaft 10. The rod 11 is threaded where it protrudes from the hollow shaft 10 so that nuts 54, 55 may be threaded onto the rod 11. The nuts 54, 55 are positioned on both sides of the cap 53. A shifter lever 56 is rigidly attached to the shifter 50 and provides a moment arm for the rod 11. The shifter cable 51 is attached to the shifter lever 56 through lever slots 57a, 57b, 57c. The multiple lever slots 57a, 57b, 57c provide for variations in speed and ease of shifting.

Now referring to Figures 1 and 10, the shifter cable 51 is routed to and coaxially wraps around a handlegrip 300. When the handlegrip 300 is rotated in a first direction, the shifter 50 winds or unwinds axially over the hollow shaft 10 and pushes or pulls the rod 11 into or out of the hollow shaft 10. When the handlegrip 300 is rotated in a second direction, a shifter spring 58, coaxially positioned over the shifter 50, returns the shifter 50 to its original position. The ends of the shifter spring 58 are attached to the shifter 50 and to a non-moving component, such as a frame (not shown).

As seen more clearly in Figure 10, the handlegrip 300 is positioned over a handlebar (not shown) or other rigid component. The handlegrip 300 includes a rotating grip 302, which consists of a cable attachment 304 that provides for attachment of the shifter cable 51 and a groove 306 that allows the shifter cable 51 to wrap around the rotating grip 302. A flange 308 is also provided to preclude a user from interfering with the routing of the shifter cable 51. Grip ratchet teeth 310 are located on the rotating grip 302 at its interface with a rotating clamp 314. The grip ratchet teeth 310 lock onto an opposing set of clamp ratchet teeth 312 when the rotating grip 302 is rotated in a first direction. The clamp ratchet teeth 312 form a ring and are attached to the rotating clamp 314 which rotates with the rotating grip 302 when the grip ratchet teeth 310 and the clamp ratchet teeth 312 are locked. The force required to rotate the rotating clamp 314 can be adjusted with a set screw 316 or other fastener. When the rotating grip 302, is rotated in a second direction, the grip ratchet teeth 310, and the clamp ratchet teeth 312 disengage. Referring back to Figure 1, the tension of the shifter spring 58 increases when the rotating grip 302 is rotated in the second direction. A non-rotating clamp 318 and a non-rotating grip 320 prevent excessive axial movement of the handlegrip 300 assembly.

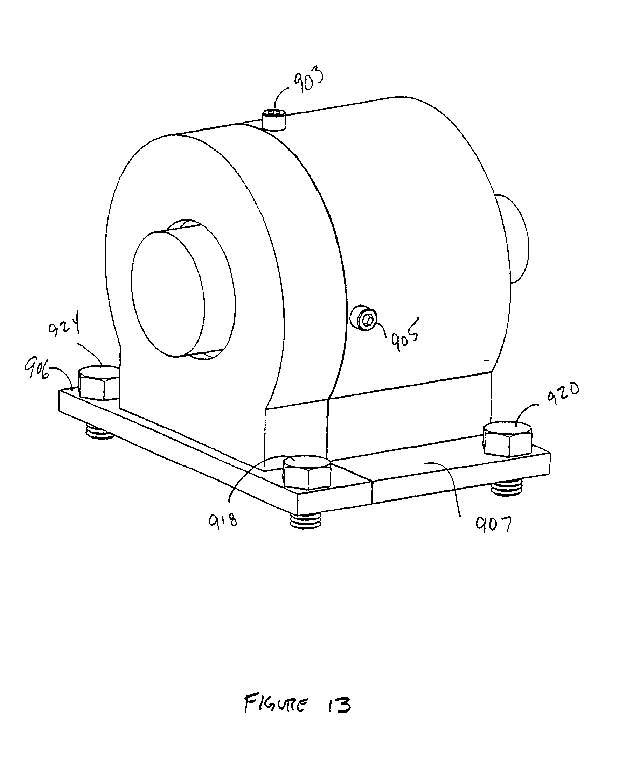

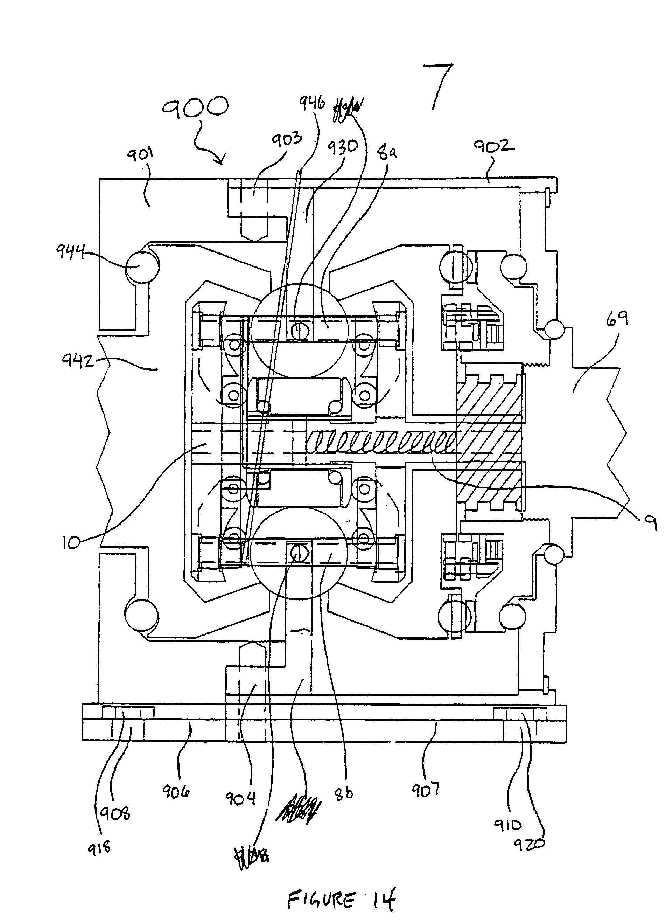

Referring to Figures 13 and 14, another embodiment of the transmission 900, is disclosed. For purposes of simplicity, only the differences between the transmission 100 and the transmission 900 are discussed.

Replacing the rotating hub shell 40 are a stationary case 901 and housing 902, which are joined with one or more set screws 903, 904, 905. The set screws 903, 904, 905 may be removed to allow access for repairs to the transmission 900. Both the case 901 and housing 902 have coplanar flanges 906, 907 with a plurality of bolt holes 908, 910, 912, 914 for insertion of a plurality of bolts 918, 920, 922, 924 to fixedly mount the transmission 900 to a non-moving component, such as a frame (not shown).

The spacer extension 930 is compressed between the stationary case 901 and housing 902 with the set screws 903, 904, 905 and extend towards and are rigidly attached to the spacers 8a, 8b, 8c. The spacer extension 930 prevents rotation of the stationary supports 5a, 5b. The stationary support 5a does not have the stationary support sleeve 42 as in the transmission 100. The stationary supports 5a, 5b hold the hollow shaft 10 in a fixed position. The hollow shaft 10 terminates at one end at the stationary support 5a and at its other end at the screw 35. An output drive disc 942 is added and is supported against the case 901 by a case bearing 944. The output drive disc 942 is attached to an output drive component, such as a drive shaft, gear, sprocket, or pulley (not shown). Similarly, the driving member 69 is attached to the input drive component, such as a motor, gear, sprocket, or pulley.

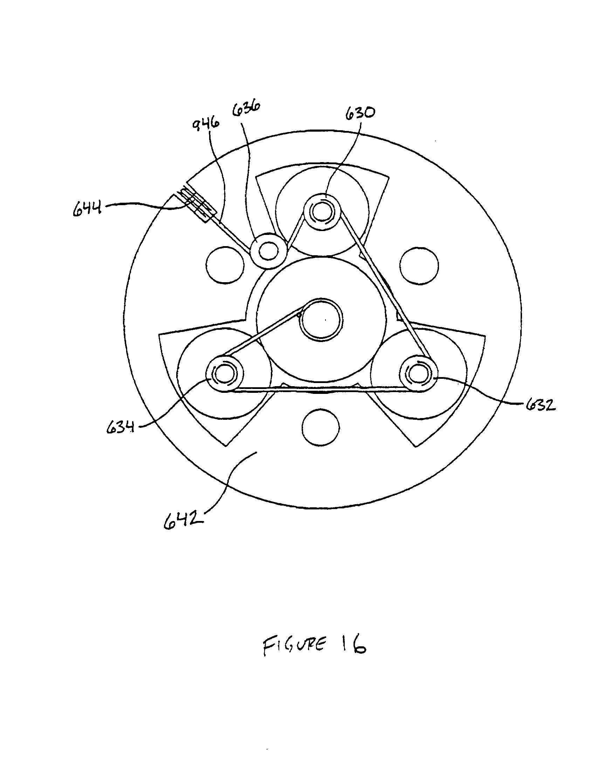

Referring to Figure 16, shifting of the transmission 900 is accomplished with a single cable 946 that wraps around each of the spindle pulleys 630, 632, 634. At one end, the single cable 946 is attached to a non-moving component of the transmission 900, such as the hollow shaft 10 or the stationary support 5a. After traveling around each of the spindle pulleys 630, 632, 634 and the spacer pulleys 636, 644, the single cable 946 exits the transmission 900 through a hole in the housing 902. Alternatively a rod (not shown) attached to one or more of the spindles 3a, 3b, 3c, may be used to shift the transmission 900 in place of the single cable 946.

The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

## Claims

1. A continuously variable transmission comprising:
a rotatable driving member (34);
three or more power adjusters (1), wherein each of the power adjusters (1) respectively rotates about an axis of rotation that is centrally located within each of the power adjusters (1);
a support member (18) providing a support surface that is in frictional contact with each of the power adjusters (1), wherein the support member (18) rotates about an axis that is centrally located within the support member (18);
at least one platform (13) for actuating axial movement of the support member (18) and for actuating a shift in the axis of rotation of the power adjusters (1), wherein the platform (13) provides a convex surface;
at least one stationary support (5) that is non-rotatable about the axis of rotation that is defined by the support member (18), wherein the at least one stationary support (5) provides a concave surface; and
a plurality of spindle supports (2), wherein each of the spindle supports (2) are operably engaged with the convex surface of the platform (13) and the concave surface of the stationary support (5), and wherein each of the spindle supports (2) adjust the axis of rotation in response to the axial movement of the platform (13).

2. The transmission of Claim 1, wherein the support surface is a uniform distance from the axis of rotation of the support member (18).

3. The transmission of claim 1, additionally comprising two bearings (17), each bearing (17) contacting one of the ends of the support member (18).

4. The transmission of Claim 3, wherein each spindle support (2) comprises at least one stationary support roller (30) for rollingly engaging the concave surface of the stationary support (5).

5. The transmission of Claim 1 or 4, additionally comprising:
a plurality of spindles (3) centrally located respectively within each of the power adjusters (1); and
wherein each of the spindle supports (2) comprise a bore for receiving one end of one of the spindles (3).

6. The transmission of Claim 1 or 4, wherein each spindle support (2) comprises at least one wheel (21) that is rollingly engaged to the convex surface ofthe platform (13).

7. The transmission of Claim 1 or 4, additionally comprising at least one outwardly extendable weight (526, 528, 530) for actuating an adjustment in the axis of rotation of each of the power adjusters (1).

8. The transmission of Claim 7, additionally comprising a rotating device (514), wherein the at least one outwardly extendable weight (526, 528, 530) is operably connected to the rotating device (514), wherein the speed of the rotating device (514) is controlled by the transmission, and wherein the spatial positioning of the at least one outwardly extendable weight (526, 528, 530) is affected by the speed of rotation of the rotating device (514),

9. The transmission of Claim 8, additional comprising:
a rotating annular bearing race (806) that is operably connected to the extendable weight (526, 528, 530;
a non-rotating annular bearing race (816); and
an annular bearing (808) that is in frictionally contact with the rotating annular bearing race (806) and the non-rotating annular bearing race (818).

10. The transmission of Claim 9, additionally comprising a plurality of spindle cables (602, 604, 606), the spindle cables (602, 604, 606) attached at a first end to the non-rotating annular bearing race (816) and at a second end operatively attached to respective spindles (3).

11. The transmission of Claim 10, additionally comprising a plurality of weight cables (532, 534, 536), the weight cables (532, 534, 536) attached at a first end to the rotating annular bearing race (806) and at a second and attached to the at least one outwardly extendable weight (526, 528, 530).

12. The transmission of Claim 11, additionally comprising a plurality of spindle pulleys (630, 632, 634), the spindle pulleys (630, 632, 634) positioned over the spindles (3) and supporting the spindle cables (602, 604, 606).

13. The transmission of Claim 12, additionally comprising at least one weight tension member (516, 518, 520), the weight tension member (516, 518, 520) operatively connected to the at least one weight (526, 528, 530), the weight tension member (516, 518, 520) biasing the at least one weight (526, 528, 530) radially away from the transmission.

14. The transmission of Claim 1 or 4, additionally comprising a rotatable hub shell (40), wherein each ofthe power adjusters (1) are in frictional contact with the hub shell.

15. The transmission of Claim 1 or 4, additionally comprising a bearing disc (60) having a plurality of inclined ramps (61) for actuating the rotation of the driving member (34).

16. The transmission of Claim 15, additionally comprising:
a hub cap (67); and
a hub cap bearing (66), wherein the hub cap bearing (67) is in frictional contact with both the hub cap (67) and the bearing disc (60).

17. The transmission of Claim 16, wherein the hub cap bearing (66) absorbs axial force generated by the ramps (61) of the bearing disc (60) and prevents axial movement of the bearing disc (60).

18. The transmission of Claim 16, additionally comprising a rotatable bearing cage (63), wherein the rotatable bearing cage (63) maintains the spacing of a plurality of ramp bearings (62) that are in frictional contact with the bearing disc (60).

19. The transmission of Claim 18, further comprising a spring (80). the spring (80) attached at a first end to the bearing cage (63), the spring (80) attached at a second end to either the bearing disc (60) or the rotatable driving member (34), the spring (80) preloading the ramp bearings (62) up the ramps (61).

20. The transmission of Claim 15, additionally comprising a plurality of ramp bearings (61), the ramp bearings (61) positioned an the ramps (61) between the rotatable driving member (34) and the bearing disc (60).

21. The transmission of Claim 15, additionally comprising:
a screw (35) that is coaxially and rigidly attached to the rotatable driving member (34) or the bearing disc (60); and
a nut (37) that, if the screw (35) is attached to the rotatable driving member (34), is coaxially and rigidly attached in the bearing disc (60), or if the screw (35) is rigidly attached to the bearing disc (60), coaxially and rigidly attached to the rotatable driving member (34).

22. The transmission of Claim 21, wherein the inclined ramps (61) of the bearing disc (60) have a higher lead than the screw (35).

23. The transmission of Claim 21, wherein the screw (35) is a left hand screw and wherein the bearing disc (60) rotates clockwise.

24. The transmission of Claim 21, wherein the screw (35) is a right hand screw and wherein the bearing disc (60) rotates counter clockwise.

25. The transmission of Claim 19 or 20, wherein in response to the cessation of rotation ofthe bearing disc (60), the power adjusters (1) wind the screw (35) or nut (37) that is rigidly attached, to the rotatable driving member (34) away from the power adjusters (1), thereby causing the transmission to disengage.

26. The transmission of Claim 15. additionaly comprising a coiled spring (80) for biasing the rotatable driving member (34) against the power adjusters (1).

27. The transmission of Claim 26, additionally comprising:
at least one lock pawl (81); and
at least one lock pawl ratchet (B2), wherein the lock pawl ratchet (82) is rigidly attached to the rotatable driving member (34), the at least one lock pawl (81) operably attached to the coiled spring (80).

28. The transmission of Claim 27, wherein the lock pawl ratchet (82) rotates at about twice the speed of the at least one lock pawl (81) when the bearing disc (60) is not rotating and when the rotatable driving member (34) is rotating.

29. The transmission of Claim 27, additionally comprising:
at least one release pawl (85); and
at least own release pawl ratchet (87) that is operably attached to the at least one lock pawl (81),
wherein the release pawl ratchet (87) is rigidly attached to the bearing disc (60).

30. The transmission of Claim 29, wherein the release pawl ratchet (87) rotates at substantially twice the speed of the at least one release pawl (85) when the rotatable driving member (34) is not rotating and the bearing disc (60) is rotating.

31. The transmission of Claim 28 or 29, wherein subsequent to disengagement of the rotatable driving member (34) from the power adjusters (1) and in response to the rotation of the bearing disc (60), the release pawl ratchet (87) engages the at least one release pawl (85), which disengages the at least one lock pawl (81), which releases the coiled spring (80) to force the rotatable driving member (34) against the power adjusters. (1)

32. The transmission of Claim 27, wherein in response to the separation of the driving member (34) and the bearing disc (60), the lock pawl (B1) engages the lock pawl ratchet (87) thereby preventing the coiled spring (80) from biasing the rotatable driving member (34) against the power adjusters (1).

33. The transmission of Claim 27, wherein the at least one lock pawl (81) is operably attached to the coiled spring (80) at substantially the middle coil of the coiled spring (80).

34. The transmission of Claim 1 or 4, additionally comprising:
a rotatable handlegrip (302) having ratchet teeth (310); and
a rotating clamp (314) with ratchet teeth (312) in ratchet connection with the handlegrip (302).

35. The transmission of Claim 34, wherein the ratchet teeth (310) of the rotating grip (302) face a first direction and wherein the ratchet teeth (312) of the rotating clamp (314) face second direction.

36. The transmission of Claim 34, wherein rotation of the rotating grip (302) in a first direction rotates the rotating clamp (314), and wherein rotating of the rotating grip (302) in a second and opposite direction does not rotate the rotating clamp (314).

37. The transmission of Claim 34, additionally comprising:
a non-rotating grip (320): and
a non-ratating clamp (318), wherein the non-rotating clamp (318) and non-rotating grip (320) preventing axial movement of the rotating grip (320) and the rotating clamp (318).

38. The transmission of Claim 1 or 4, additionally comprising:
a hollow shaft (10) having at least one slot (16);
a sleeve (19) that is slidingly and coaxially positioned over the hollow shaft (10);
a pin (12) contacting the sleeve (19) through the slot (16) in the hollow shaft (10); and
wherein the platform (13) contacts the sleeve (19) and moves axially in response to axial movement of the sleeve (19) and pin (12).

39. The transmission of Claim 1 or 4, wherein the at least one stationary support (5) includes two stationary supports (5), wherein each of the stationary supports (5) are rigidly connected to each other by a plurality of spacers

40. The transmission of Claim 1 or 4, additionally comprising a rotatable driven (40) member that is in frictional contact with each of the power adjusters (1).

41. The transmission of Claim 40, additionally comprising a non-rotatable hub shell (901, 902) encasing the transmission.

42. The continuously variable transmission of Claim 1, further comprising:
a bearing disc (80) having a plurality of inclined ramps (61) for actuating the rotation of the driving member (34);
at least one lock pawl (81);
a coiled spring (80) for biasing the rotatable driving member (34) against the power adjusters (1);
at least one lock pawl ratchet (82), wherein the lock pawl ratchet (82) is rigidly attached to the rotatable driving member (34), wherein the at least one lock pawl (81) is operably attached to the coiled spring (80); and wherein the at least one lock pawl (81) locks the lock pawl ratchet (82) in response to the rotatable driving member (34) becoming disengaged from the power adjusters (1).

43. The continuously variable transmission of Claim 1, further comprising:
a bearing disc (60) having a plurality of inclined ramps (61) for actuating the rotation of the driving member (34);
a screw (35) that is coaxially and rigidly attached to the rotatable driving member (34) or the bearing disc (60); and
a nut (37) that, if the screw (35) is attached to the rotatable driving member (34), is coaxially and rigidly attached to the bearing disc (60), or if the screw (35) is rigidly attached to the bearing disc (60), coaxially and rigidly attached to the rotatable driving member (34), wherein the Inclined ramps (61) of the bearing disc (60) have a higher lead than the screw (35).

## Patentansprüche

1. Stufenloses Getriebe mit:
einem drehbaren Antriebsteil (34);
drei oder mehr Leistungsverstellern (1 ) die jeweils um eine mittig in jedem der Leistungsversteller (1) angeordnete Drehachse rotieren;
einem Stützteil (18), das eine Stützoberfläche bereitstellt, die sich in Reibkontakt mit jedern der Leistungsversteller (1 ) befindet, wobei sich das Stützteil (18) um eine Achse dreht, die in dem Stützteil (18) mittig angeordnet ist;
mindestens einer Plattform (13) für das Antreiben einer axialen Bewegung des Stützteiles (18) und für das Auslösen eines Umschaltens in der Drehachse des Leistungsverstellers (1 ), wobei die Plattform (3) eine konvexe Oberfläche vorsieht;
zumindest einer stationären Halterung (5), die nicht um die Rotationsachse drehbar ist, welche durch das Stützteil (18) bestimmt ist, wobei die zumindest eine stationäre Halterung (5) eine konkave Oberfläche vorsieht;
einer Vielzahl von Achsauflagen (2), deren jede im Betrieb mit der konvexen Oberfläche der Plattform (13) und der konkaven Oberfläche der stationären Halterung (5) in Eingriff steht, wobei jede der Achsauflagen (2) die Drehachse in Abhängigkeit von der axialen Bewegung der Plattform (13) einstellt.

2. Getriebe nach Anspruch 1, wobei die Stützoberfläche sich in einem gleichmäßigen Abstand von der Drehachse des Stützteiles (18) befindet.

3. Getriebe nach Anspruch 1, zusätzlich mit zwei Lagern (17), deren jedes eines der Enden des Stützteiles berührt.

4. Getriebe nach Anspruch 3, wobei jede Achsauflage (2) mindestens eine stationäre Tragerolle (30) aufweist für den rollenden Eingriff mit der konkaven Oberfläche der stationären Halterung (5).

5. Getriebe nach Anspruch 1 oder 4, zusätzlich mit:
einer Vielzahl von Achsen (3), die jeweils mittig in jedem der Leistungsversteller (1 ) angeordnet sind; und wobei jede Achsauflage (2) eine Bohrung aufweist für die Aufnahme eines Endes einer der Achsen (3).

6. Getriebe nach Anspruch 1 oder 4, wobei jede Achsauflage (2) mindestens ein Rad (21), daß in Rolleingriff mit der konvexen Oberfläche der Plattform (13) steht, aufweist.

7. Getriebe nach Anspruch 1 oder 4, zusätzlich mit mindestens einem nach außen verlängerbaren Gewicht (526, 528, 530) für die Betätigung einer Verstellung in der Drehachse jedes der Leistungsversteller (1).

8. Getriebe nach Anspruch 7, zusätzlich mit einer Drehvorrichtung (514), wobei das mindestens eine nach außen verlängerbare Gewicht (526, 528, 530) im Betrieb mit der Drehvorrichtung (514) verbunden ist, wobei die Drehzahl der Drehvorrichtung (514) von dem Getriebe gesteuert wird und wobei das räumliche Positionieren des mindestens einen nach außen verlängerbaren Gewichtes (526, 528, 530) von der Drehzahl der Drehvorrichtung (514) beeinflußt wird.

9. Getriebe nach Anspruch 8, zusätzlich mit:
einem drehenden, ringförmigen Laufring (806), der im Betrieb mit dem verlängerbaren Gewicht (526, 528, 530) verbunden ist;
einem nicht drehenden, ringförmigen Laufring (816); und
einem ringförmigen Lager (808), welches mit dem drehenden, ringförmigen Laufring (806) und dem nicht drehenden, ringförmigen Laufring (816) in Reibkontakt steht.

10. Getriebe nach Anspruch 9, zusätzlich mit einer Vielzahl von Achsseilen (602, 604, 606), die an einem ersten Ende des nicht drehenden, ringförmigen Laufringes (816) und einem zweiten Ende angebracht sind, welches an entsprechenden Achsen (3) betrieblich angebracht ist.

11. Getriebe nach Anspruch 10, zusätzlich mit einer Vielzahl von Gewichtsseilen (532, 534, 536), die an einem ersten Ende an dem drehenden, ringförmigen Laufring (806) und an einem zweiten Ende angebracht sind, welches an dem mindestens einen nach außen verlängerbaren Gewicht (526, 528, 530) angebracht ist.

12. Getriebe nach Anspruch 11, zusätzlich mit einer Vielzahl von Achsriemenscheiben (630, 632, 634), die über den Achsen (3) angeordnet sind und die Achsseile (602, 604, 606) haltern.

13. Getriebe nach Anspruch 12, zusätzlich mit mindestens einem Gewichtsspannungsteil (516, 518, 520), welches betrieblich mit dem mindestens einen Gewicht (526, 528, 530) verbunden ist, wobei das Gewichtsspannungsteil (516, 518, 520) das mindestens eine Gewicht (526, 528, 530) in radialer Richtung von dem Getriebe weg vorspannt.

14. Getriebe nach Anspruch 1 oder 4, zusätzlich mit einem drehbaren Nabengehäuse (40) wobei sich jeder der Leistungsversteller (1 ) mit dem Nabengehäuse in Reibkontakt befindet.

15. Getriebe nach Anspruch 1 oder 4, zusätzlich mit einer Lagerscheibe (60) mit einer Vielzahl von geneigten Rampen (61) für die Betätigung der Drehung des Antriebsteiles (34).

16. Getriebe nach Anspruch 15, zusätzlich mit:
einer Nabenkappe (67); und
einem Nabenkappenlager (66), wobei das Nabenkappenlager (66) sowohl mit der Nabenkappe (67) als auch mit der Lagerscheibe (60) in Reibkontakt ist.

17. Getriebe nach Anspruch 16, wobei das Nabenkappenlager (66) die Axialkraft absorbiert, die von den Rampen (61) der Lagerscheibe (60) erzeugt wird, und eine axiale Bewegung der Lagerscheibe (60) verhindert.

18. Getriebe nach Anspruch 16, zusätzlich mit einem drehbaren Lagerkäfig (63), welcher den Abstand einer Vielzahl von Rampenlagern (62) hält, die mit der Lagerscheibe (60) in Reibkontakt sind.

19. Getriebe nach Anspruch 18, ferner mit einer Feder (80), die an einem ersten Ende an dem Lagerkäfig (63) angebracht ist und an einem zweiten Ende, das entweder an der Lagerscheibe (60) oder dem drehbaren Antriebsteil (34) angebracht ist, wobei die Feder (80) die Rampenlager (62) die Rampen (61) hoch vorspannt.

20. Getriebe nach Anspruch 15, zusätzlich mit einer Mehrzahl von Rampenlagern (61 ), die auf den Rampen (61) zwischen dem drehbaren Antriebsteil (34) und der Lagerscheibe (60) angeordnet sind.

21. Getriebe nach Anspruch 15, zusätzlich mit:
einer Schraube (35), die koaxial und fest an dem drehbaren Antriebsteil (34) oder der Lagerscheibe (60) angebracht ist; und
einer Mutter (37), die wenn die Schraube (35) an dem drehbaren Antriebsteil (34) angebracht ist koaxial und fest an der Lagerscheibe (60) angebracht ist, oder, wenn die Schraube (35) an der Lagerscheibe (60) fest angebracht ist koaxial und fest an dem drehbaren Antriebsteil (34) angebracht ist.

22. Getriebe nach Anspruch 21, wobei die geneigten Rampen (61) der Lagerscheibe (60) eine höhere Steigung haben als die Schraube (35).

23. Getriebe nach Anspruch 21, wobei die Schraube (35) eine linksgängige Schraube ist und die Lagerscheibe (60) sich im Uhrzeigersinn dreht.

24. Getriebe nach Anspruch 21, wobei die Schraube (35) eine rechtsgängige Schraube ist und die Lagerscheibe (60) sich im Gegenuhrzeigersinn dreht.

25. Getriebe nach Anspruch 19 oder 20, wobei in Antwort auf die Beendigung der Drehung der Lagerscheibe (60) die Leistungsversteller (1 ) die Schraube (35) oder die Mutter (37), die fest an dem drehbaren Antriebsteil (34) angebracht sind, von den Leistungsverstellern (1 ) weg bewegt, wodurch veranlaßt wird, daß das Getriebe außer Eingriff kommt.

26. Getriebe nach Anspruch 15, zusätzlich mit einer Schraubenfeder (80) zum Vorspannen des drehbaren Antriebsteils (34) gegen die Leistungsversteller (1 ).

27. Getriebe nach Anspruch 26, zusätzlich mit:
mindestens einer Sperrklinke (81 ); und
mindestens einem Sperrklinkenzahnrad (82), das fest an dem drehbaren Antriebsteil (34) angebracht ist, wobei die mindestens eine Sperrklinke (81 ) im Betrieb an der Schraubenfeder (80) angebracht ist.

28. Getriebe nach Anspruch 27, wobei die Drehzahl des Sperrklinkenzahnrades (82) etwa doppelt so groß wie die der mindestens einen Sperrklinke (81 ) ist, wenn die Lagerscheibe (60) sich nicht dreht und wenn sich das drehbare Antriebsteil (34) dreht.

29. Getriebe nach Anspruch 27, zusätzlich mit:
mindestens einer ersten Löseklinke (85); und
mindestens einem Löseklinkenzahnrad (87), das im Betrieb an der mindestens einen Sperrklinke (81) angebracht ist, wobei das Löseklinkenzahnrad (87) fest an der Lagerscheibe (60) angebracht ist.

30. Getriebe nach Anspruch 29, wobei das Lösekiinkenzahnrad (87) mit einer im wesentlichen doppelt so großen Drehzahl wie die mindestens eine Löseklinke (85) dreht, wenn sich das drehbare Antriebsteil (34) nicht dreht und sich die Lagerscheibe (60) dreht.

31. Getriebe nach Anspruch 28 oder 29, wobei nach dem Außereingriffkommen des drehbaren Antriebsteiles (34) von den Leistungsverstellern (1 ) und in Abhängigkeit zu der Drehung der Lagerscheibe (60) das Löseklinkenzahnrad (87) mit der mindestens einen Löseklinke (85) in Eingriff kommt, wodurch die mindestens eine Sperrklinke (81 ) außer Eingriff kommt, wodurch die Schraubenfeder (80) gelöst wird, um das drehbare Antriebsteil (34) gegen die Leistungsversteller (1 ) zu drücken.

32. Getriebe nach Anspruch 27, wobei in Abhängigkeit von dem Trennen des Antriebsteiles (34) und der Lagerscheibe (60) die Sperrklinke (81 ) mit dem Sperrklinkenzahnrad (87) in Eingriff kommt, wodurch die Schraubenfeder (80) daran gehindert wird, das drehbare Antriebsteil (34) gegen die Leistungsversteiter (1) vorzuspannen.

33. Getriebe nach Anspruch 27, wobei die mindestens eine Sperrklinke (81 ) im Betrieb an der Schraubenfeder (80) an im wesentlichen der Mittelwende der Schraubenfeder (80) angebracht ist.

34. Getriebe nach Anspruch 1 oder 4, zusätzlich mit:
einem drehbaren Handgriff (302) mit Sperrzähnen (310); und
einer Drehklemme (314) mit Sperrzähnen (312) in Sperrverbindung mit dem Handgriff (302).

35. Getriebe nach Anspruch 34, wobei die Sperrzähne (310) des Drehgriffes (302) einer ersten Richtung zugewandt sind und wobei die Sperrzähne (312) der Drehklemme (314) einer zweiten Richtung zugewandt sind.

36. Getriebe nach Anspruch 34, wobei die Drehung des Drehgriffes (302) in einer ersten Richtung die Drehklemme (314) dreht und wobei die Drehung des Drehgriffes (302) in einer zweiten und entgegengesetzten Richtung die Drehklemme (314) nicht dreht.

37. Getriebe nach Anspruch 34, zusätzlich mit:
einem nicht drehenden Griff (320); und
einer nicht drehenden Klemmeinrichtung (318), wobei letztere und der nicht drehende Griff (320) die axiale Bewegung des Drehgriffes (320) und der Drehklemme (318) verhindern.

38. Getriebe nach Anspruch 1 oder 4, zusätzlich mit:
einer Hohlwelle (10) mit mindestens einem Schlitz (16);
einer Hülse (19), die über der Hohlwelle (10) gleitend und koaxial angeordnet ist;
einem Stift (12) in Berührung mit der Hülse (19) über den Schlitz (16) in der Hohlwelle (10); und
wobei die Plattform (13) die Hülse (19) berührt und sich axial in Abhängigkeit von der Axialbewegung der Hülse (19) und des Stiftes (12) bewegt.

39. Getriebe nach Anspruch 1 oder 4, wobei die mindestens eine stationäre Halterung (5) zwei stationäre Halterungen (5) aufweist, deren jede fest durch eine Vielzahl von Abstandshaltern mit der jeweils anderen verbunden ist.

40. Getriebe nach Anspruch 1 oder 4, zusätzlich mit einem drehbaren, angetriebenen (40) Teil, welches mit jedem der Leistungsversteller (1 ) in Reibkontakt ist.

41. Getriebe nach Anspruch 40, zusätzlich mit einem nicht drehbaren Nabengehäuse (901, 902), welches das Getriebe umgibt.

42. Stufenloses Getriebe nach Anspruch 1, ferner mit:
einer Lagerscheibe (60) mit einer Vielzahl von geneigten Rampen (61) für die Betätigung der Drehung des Antriebsteiles (34);
mindestens einer Sperrklinke (81 );
einer Schraubenfeder (80) für das Vorspannen des drehbaren Antriebsteiles (34) gegen die Leistungsversteller (1);
mindestens einem Sperrklinkenzahnrad (82), das fest an dem drehbaren Antriebsteil (34) angebracht ist, wobei die mindestens eine Sperrklinke (81 ) im Betrieb an der Schraubenfeder (80) angebracht ist; und wobei die mindestens eine Sperrklinke (81 ) das Sperrklinkenzahnrad (82) in Abhängigkeit von dem drehbaren Antriebsteil (34), welches von den Leistungsverstellern (1 ) außer Eingriff kommt, sperrt.

43. Stufenloses Getriebe nach Anspruch 1, ferner mit:
einer Lagerscheibe (60) mit einer Vielzahl von geneigten Rampen (61) für die Betätigung der Drehung des Antriebsteiles (34);
einer Schraube (35), die koaxial und fest an dem drehbaren Antriebsteil (34) oder der Lagerscheibe (60) angebracht ist; und
einer Mutter (37), die bei Anbringung der Schraube (35) an dem drehbaren Antriebsteil (34) koaxial und fest an der Lagerscheibe (60) angebracht ist oder bei fester Anbringung der Schraube an der Lagerscheibe (60) koaxial und fest an dem drehbaren Antriebsteil (34) angebracht ist, wobei die geneigten Rampen (61) der Lagerscheibe (60) eine größere Steigung haben als die Schraube (35).

## Revendications

1. Transmission variable d'une façon continue, comprenant:
un élément de commande rotatif (34);
trois ou plus de trois ajusteurs de puissance (1), chacun des ajusteurs de puissance (1) tournant respectivement autour d'un axe de rotation qui est situé d'une façon centrale à l'intérieur de chacun des ajusteurs de puissance (1);
un élément de support (18) fournissant une surface de support qui se trouve en contact frictionnel avec chacun des ajusteurs de puissance (1), l'élément de support (18) tournant autour d'un axe qui est situé d'une façon centrale à l'intérieur de l'élément de support (18);
au moins une plate-forme (13) destinée à activer un déplacement axial de l'élément de support (18) et à provoquer un glissement de l'axe de rotation des ajusteurs de puissance (1), la plate-forme (13) fournissant une surface convexe;
au moins un support stationnaire (5) qui ne tourne pas autour de l'axe de rotation défini par l'élément de support (18), au moins un support stationnaire (5) fournissant une surface concave; et
une pluralité de supports de broche (2), chacun des supports de broche (2) étant engagé d'une façon opérationnelle avec la surface convexe de la plate-forme (13) et avec la surface concave du support stationnaire (5), et chacun des supports de broche (2) ajustant l'axe de rotation en réaction au déplacement axial de la plate-forme (13).

2. Transmission selon la revendication 1, dans laquelle la surface de support se trouve à une distance uniforme de l'axe de rotation de l'élément de support (18).

3. Transmission selon la revendication 1, comprenant en outre deux paliers (17), chaque palier (17) touchant l'une des extrémités de l'élément de support (18).

4. Transmission selon la revendication 3, dans laquelle chaque support de broche (2) comprend au moins un rouleau de support stationnaire (30) pour engager par roulement la surface concave du support stationnaire (5).

5. Transmission selon la revendication 1 ou 4, comprenant en outre:
une pluralité de broches (3) situées respectivement d'une façon centrale à l'intérieur de chacun des ajusteurs de puissance (1) ; et dans laquelle chacun des supports de broche (2) comporte un alésage destiné à recevoir une extrémité de l'une des broches (3).

6. Transmission selon la revendication 1 ou 4, dans laquelle chaque support de broche (2) comprend au moins une roue (21) engagée par roulement sur la surface convexe de la plate-forme (13).

7. Transmission selon la revendication 1 ou 4, comprenant en outre au moins un poids extensible vers l'extérieur (526, 528, 530) destiné à déclencher un ajustement de l'axe de rotation de chacun des ajusteurs de puissance (1).

8. Transmission selon la revendication 7, comprenant en outre un dispositif de rotation (514), dans laquelle au moins un poids extensible vers l'extérieur (526, 528, 530) est connecté d'une façon opérationnelle au dispositif de rotation (514), la vitesse du dispositif de rotation (514) étant commandée par la transmission, et le positionnement spatial d'au moins un poids extensible vers l'extérieur (526, 528, 530) étant affecté par la vitesse de rotation du dispositif de rotation (514).

9. Transmission selon la revendication 8, comprenant en outre:
une bague de roulement annulaire rotative (806) connectée d'une façon opérationnelle au poids extensible (526, 528, 530);
une bague de roulement annulaire non rotative (816); et
un palier annulaire (808) qui se trouve en contact frictionnel avec la bague de roulement annulaire rotative (806) et la bague de roulement annulaire non rot at ive (816).

10. Transmission selon la revendication 9, comprenant en outre une pluralité de câbles de broche (602, 604, 606), lesdits câbles de broche (602, 604, 606) étant attachés par une première extrémité à la bague de roulement annulaire non rotative (816) et étant attachés d'une façon opérationnelle par une deuxième extrémité aux broches respectives (3).

11. Transmission selon la revendication 10, comprenant en outre une pluralité de câbles de poids (532, 534, 536), les câbles de poids (532, 534, 536) étant attachés à une première extrémité à la bague de roulement annulaire rotative (806) et par une deuxième extrémité à au moins un poids extensible vers l'extérieur (526, 528, 530).

12. Transmission selon la revendication 11, comprenant en outre une pluralité de poulies de broche (630, 632, 634), les poulies de broche (630, 632, 634) étant positionnées sur les broches (3) et supportant les câbles de broche (602, 604, 606).

13. Transmission selon la revendication 12, comprenant en outre au moins un élément de tension de poids (516, 518, 520), l'élément de tension de poids (516, 518, 520) étant connecté d'une façon opérationnelle à au moins un poids (526, 528, 530), l'élément de tension de poids (516, 518, 520) sollicitant au moins un poids (526, 528, 530) radialement à l'écart de la transmission.

14. Transmission selon la revendication 1 ou 4, comprenant en outre une coquille de moyeu rotative (40), dans laquelle chacun des ajusteurs de puissance (1) se trouve en contact frictionnel avec la coquille de moyeu.

15. Transmission selon la revendication 1 ou 4, comprenant en outre un disque porteur (60) comportant une pluralité de rampes inclinées (61) destinées à activer la rotation de l'élément de commande (34).

16. Transmission selon la revendication 15, comprenant en outre:
un chapeau de moyeu (67); et
un roulement de chapeau de moyeu (66), le roulement de chapeau de moyeu (66) se trouvant en contact frictionnel à la fois avec le chapeau de moyeu (67) et avec le disque porteur (60).

17. Transmission selon la revendication 16, dans laquelle le roulement de chapeau de moyeu (66) absorbe la force axiale générée par les rampes (61) du disque porteur (60) et empêche le déplacement axial du disque porteur (60).

18. Transmission selon la revendication 16, comprenant en outre une cage de palier rotative (63), la cage de palier rotative (63) maintenant l'espacement d'une pluralité de paliers de rampe (62) qui se trouvent en contact frictionnel avec le disque porteur (60).

19. Transmission selon la revendication 18, comprenant en outre un ressort (80), le ressort (80) étant attaché par une première extrémité à la cage de palier (63), le ressort (80) étant attaché par une deuxième extrémité soit au disque porteur (60), soit à l'élément de commande rotatif (34), le ressort (80) pré-chargeant les paliers de rampe (62) vers le haut des rampes (61).

20. Transmission selon la revendication 15, comprenant en outre une pluralité de paliers de rampe (62), les paliers de rampe (62) étant positionnés sur les rampes (61) entre l'élément de commande rotatif (34) et le disque porteur (60) .

21. Transmission selon la revendication 15, comprenant en outre:
une vis (35) attachée d'une façon coaxiale et rigide à l'élément de commande rotatif (34) ou au disque porteur (60); et
un écrou (37) qui, si la vis (35) est attachée à l'élément de commande rotatif (34), est attaché d'une façon coaxiale et rigide au disque porteur (60), ou si la vis (35) est attachée d'une façon rigide au disque porteur (60), est attaché d'une façon coaxiale et rigide à l'élément de commande rotatif (34).

22. Transmission selon la revendication 21, dans laquelle les rampes inclinées (61) du disque porteur (60) ont une charge plus élevée que la vis (35).

23. Transmission selon la revendication 21, dans laquelle la vis (35) est une vis à pas gauche, et dans laquelle le disque porteur (60) tourne dans le sens horaire.

24. Transmission selon la revendication 21, dans laquelle la vis (35) est une vis à pas droit, et dans laquelle le disque porteur (60) tourne dans le sens anti-horaire.

25. Transmission selon la revendication 19 ou 20, dans laquelle, en réaction à la fin de la rotation du disque porteur (60), les ajusteurs de puissance (1) vissent la vis (35) ou l'écrou (37), attaché(e) d' une façon rigide à l'élément de commande rotatif (34) des ajusteurs de puissance (1), entraînant ainsi le désengagement de la transmission.

26. Transmission selon la revendication 15, comprenant en outre un ressort hélicoïdal (80) destiné à pousser l'élément de commande rotatif (34) contre les ajusteurs de puissance (1).

27. Transmission selon la revendication 26, comprenant en outre:
au moins un doigt de verrouillage (81) ; et
au moins une roue à rochet des doigts de verrouillage (82), la roue à rochet des doigts de verrouillage (82) étant attachée d'une façon rigide à l'élément de commande rotatif (34), au moins un doigt de verrouillage (81) étant attaché d'une façon opérationnelle au ressort hélicoïdal (80).

28. Transmission selon la revendication 27, dans laquelle la roue à rochet des doigts de verrouillage (82) tourne à environ deux fois la vitesse d'au moins un doigt de verrouillage (81) lorsque le disque porteur (60) ne tourne pas et lorsque l'élément de commande rotatif (34) tourne.

29. Transmission selon la revendication 27, comprenant en outre:
au moins un doigt de libération (85) ; et
au moins une roue à rochet des doigts de libération (87), qui est attachée d'une façon opérationnelle à au moins un doigt de verrouillage (81), la roue à rochet des doigts de libération (87) étant attachée d'une façon rigide au disque porteur (60).

30. Transmission selon la revendication 29, dans laquelle la roue à rochet des doigts de libération (87) tourne substantiellement à deux fois la vitesse d'au moins un doigt de libération (85) lorsque l'élément de commande rotatif (34) ne tourne pas et lorsque le disque porteur (60) tourne .

31. Transmission selon la revendication 28 ou 29, dans laquelle suite au désengagement de l'élément de commande rotatif (34) hors des ajusteurs de puissance (1) et en réaction à la rotation du disque porteur (60), la roue à rochet des doigts de libération (87) engage au moins un doigt de libération (85), ce qui désengage au moins un doigt de verrouillage (81), ce qui libère le ressort hélicoïdal (80) pour forcer l'élément de commande rotatif (34) contre les ajusteurs de puissance (1).

32. Transmission selon la revendication 27, dans laquelle, en réaction à la séparation de l'élément de commande (34) et du disque porteur (60), le doigt de verrouillage (81) engage la roue à rochet des doigts de verrouillage (87), empêchant ainsi le ressort hélicoïdal (80) de pousser l'élément de commande rotatif (34) contre les ajusteurs de puissance (1).

33. Transmission selon la revendication 27, dans laquelle au moins un doigt de verrouillage (81) est attaché d'une façon opérationnelle au ressort hélicoïdal (80) substantiellement à la spire du milieu du ressort hélicoïdal (80) .

34. Transmission selon la revendication 1 ou 4, comprenant en outre:
un collier de serrage (302) comportant des dents d'encliquetage (310); et
une bague rotative (314) comportant des dents d'encliquetage - (312) en connexion encliquetée avec le collier de serrage (302) .

35. Transmission selon la revendication 34, dans laquelle les dents d'encliquetage (310) du collier rotatif (302) sont orientées dans une première direction, et dans laquelle les dents d'encliquetage (312) de la bague rotative (314) sont orientée dans une deuxième direction.

36. Transmission selon la revendication 34, dans laquelle la rotation du collier rotatif (302) dans une première direction fait tourner la bague rotative (314), et dans laquelle la rotation du collier rotatif (302) dans une deuxième direction, opposée ne fait pas tourner la bague rotative (314).

37. Transmission selon la revendication 34, comprenant en outre:
un collier non rotatif (320); et
une bague non rotative (318), la bague non rotative (318) et le collier non rotatif (320) empêchant un déplacement axial du collier rotatif (320) et de la bague rotative (314).

38. Transmission selon la revendication 1 ou 4, comprenant en outre:
un arbre creux (10) comportant au moins une fente (16) ;
un manchon (19) positionné d'une façon glissante et coaxiale sur l'arbre creux (10);
une cheville (12) qui entre en contact avec le manchon (19) à travers la fente (16) dans l'arbre creux (10) ; et
dans laquelle la plate-forme (13) entre en contact avec le manchon (19) et se déplace axialement en réaction au déplacement axial du manchon (19) et de la cheville (12).

39. Transmission selon la revendication 1 ou 4 , dans laquelle au moins un support stationnaire (5) comprend deux supports stationnaires (5), chacun des supports stationnaires (5) étant connecté d'une façon rigide l'un à l'autre par une pluralité d'écarteurs.

40. Transmission selon la revendication 1 ou 4, comprenant en outre un élément entraîné rotatif (40) qui se trouve en contact frictionnel avec chacun des ajusteurs de puissance (1).

41. Transmission selon la revendication 40, comprenant en outre une coquille de moyeu non rotative (901, 902) accueillant la transmission.

42. Transmission variable d'une façon continue selon la revendication 1, comprenant en outre:
un disque porteur (60) comportant une pluralité de rampes inclinées (61) destinées à activer la rotation de l'élément de commande (34);
au moins un doigt de verrouillage (81);
un ressort hélicoïdal (80) pour pousser l'élément de commande rotatif (34) contre les ajusteurs de puissance (1) ;
au moins une roue à rochet des doigts de verrouillage (82), la roue à rochet des doigts de verrouillage (82) étant attachée d'une façon rigide à l'élément de commande rotatif (34), au moins un doigt de verrouillage (81) étant attaché d'une façon opérationnelle au ressort hélicoïdal (80); et au moins un doigt de verrouillage (81) verrouillant la roue à rochet des doigts de verrouillage (82) en réaction au désengagement de l'élément de commande rotatif (34) des ajusteurs de puissance (1).

43. Transmission variable d'une façon continue selon la revendication 1, comprenant en outre:
un disque porteur (60) comportant une pluralité de rampes inclinées (61) destinées à déclencher la rotation de l'élément de commande (34);
une vis (35) attachée d'une façon coaxiale et rigide à l'élément de commande rotatif (34) ou au disque porteur (60); et
un écrou (37) qui, si la vis (35) est attachée à l'élément de commande rotatif (34), est attaché d'une façon coaxiale et rigide au disque porteur (60), ou si la vis (35) est attachée d'une façon rigide au disque porteur (60), est attaché d'une façon coaxiale et rigide à l'élément de commande rotatif (34), les rampes inclinées (61) du disque porteur (60) ayant un pas supérieur à celui de la vis (35).
